# EUROPEAN PATENT SPECIFICATION

(11) **EP 0 423 979 B1**
(45) Date of publication and mention of the grant of the patent: **09.07.1997**
(21) Application number: 90310868.6
(22) Date of filing: 04.10.1990
(51) Int. Cl.: H04N 9/79, H04N 5/91

(54) **High definition video signal recording systems**
Anordnung zum Aufzeichnen eines Videosignals mit hoher Auflösung
Système d'enregistrement d'un signal video à haute définition

(30) Priority: 20.10.1989 US 424478
(43) Date of publication of application: 24.04.1991
(73) Proprietor: SONY CORPORATION, Tokyo 141 (JP)
(72) Inventor: Perry, Vinson R., San Carlos, California 94070 (US); Klingelhofer, Marc, Fremont, California 94555 (US); Rohwer, Thomas A., Sunnyvale, California 94086-8005 (US)
(74) Representative: Cotter, Ivan John

(56) References cited:
- EP-A- 0 176 290
- WO-A-88/05244
- US-A- 4 612 577
- PROCEEDINGS OF THE SECOND INTERNATIONAL WORKSHOP ON SIGNAL PROCESSING OF HDTV March 1988, L AQUILA, IT pages 309 - 316 , XP000075067 NAKAYA ET AL 'An HDTV Image Processing Simulator and its Applications to Bit Rate Reduction'
- BBC RESEARCH DEPARTMENT REPORT no. 6, August 1987, TADWORTH GB pages 1 - 29, RILEY ET AL 'A REVIEW OF THE SEMICONDUCTOR STORAGE OF TELEVISION SIGNALS: PART 2 APPLICATIONS 1975 - 1986
- 16TH INTERNATIONAL TV SYMPOSIUM; SYMPOSIUM RECORD BROADCAST SESSIONS June 1989, MONTREUX, CH pages 289 - 295 , XP000041124 WOODHAM 'A Solid State "Action Replay" Recorder'
- INTERNATIONAL BROADCASTING CONVENTION September 1988, BRIGHTON, GB pages 422 - 424 , XP000232985 CROOK ET AL 'Solid State Video Recorder'
- TOUTE L'ELECTRONIQUE no. 544, May 1989, PARIS FR pages 28 - 32 , XP000212712 DESCAMPS 'Un ASIC, controleur spécialisé de vidéo RAM'
- ELEKTRONIK vol. 38, no. 7, March 1989, MUNCHEN DE pages 71 - 74 , XP000112018 PREXL 'ASIC steuert digitalen Halbbildspeicher'
- JOURNAL OF THE SOCIETY OF MOTION PICTURE ENGINEERS vol. 100, no. 1, January 1991, NEW YORK US pages 10 - 13 , XP000173301 PERRY 'HDTV Digital Frame Recorder'
- Postes, Téléphones et Télégraphes Suisses, Broadcast Sessions, International Television Symposium and Technical Exhibition, Montreux, June 6-12, 1985, Symp. 13; Symp. 1985, CH, Bern, PTT, 1985, pages 279-300; E. Fraser Morrison: "INTERFACE OF A DIGITAL VIDEOTAPE RECORDER IN A DIGITAL COMPONENT STUDIO"

## Description

This invention relates to high definition video signal recording systems.

Systems have been proposed for recording individual fields and frames of conventional video signals (having NTSC or PAL format). Recently, the Society of Motion Picture and Television Engineers has adopted a standard, known as the SMPTE 240M standard, for high definition video signals. Throughout this description, the phrase "high definition video signal" (or "HDTV signal") will be used to denote a 1125-line, 60 Hz video signal (having an aspect ratio of 16 to 9) which meets the SMPTE 240M standard, or which meets the SMPTE 240M requirements for field rate, aspect ratio, blanking interval duration, and number of horizontal lines per field, but differs from the SMPTE 240M standard in other respects. The same phrase as used in the claims includes, but is not restricted to, the foregoing definition, in that it covers also any other form of high definition television signal to which the invention is applicable.

It would be desirable to record one or more individual fields and frames of a colour HDTV signal (either analog or digital), for post production, editing, off-speed transfer of the signal, and other purposes. However, it had not heretofore been known how to record individual fields or frames of a colour HDTV signal for partial or full frame or field transfers to a host computer (or other processing or display unit) at arbitrary speed (i.e. less than or equal to the standard video rate) using a system which emulates a conventional video tape recorder ("VTR") with very fast response and is compatible with conventional digital computer systems and image processing systems.

PROCEEDINGS OF THE SECOND INTERNATIONAL WORKSHOP ON SIGNAL PROCESSING OF HDTV March 1988, L AQUILA, IT pages 309 - 316, NAKAYA ET AL "An HDTV Image processing Simulator and its Applications to Bit Rate Reduction", discloses a high definition video signal processing system including a buffer memory for receiving parallel format data representing a high definition video signal and capable of storing data representing frames of the high definition video signal, a DMA interface enabling parameters and single commands to be transferred from a host computer to an MPU, the MPU controlling the read/write mode of the buffer memory through a memory control circuit, and the host computer being capable of getting stored data from the memory, and a video interface and series/parallel converter for digitising and series/parallel converting an analogue high definition video signal to produce the parallel format data to be stored in the buffer memory.

Other video signal processing systems of background relevance to the present invention are disclosed in: International Patent Application Publication No. WO-A-8805244; and in TOUTE L'ELECTRONIQUE no. 544, May 1989, PARIS FR pages 28 - 32, DESCAMPS "UN ASIC, controleur specialisé de video RAM".

According to the invention there is provided a high definition digital video signal recording system, including:
(a) a frame memory unit having an input arrangement for receiving parallel format digital data representing a high definition video signal, and an output arrangement for outputting parallel format digital video data, the frame memory unit including memory circuitry capable of storing data representing one or more frames of the high definition video signal;
(b) an input processor connected to the frame memory unit having a first input for receiving digital video data, a second input for receiving analogue video data and including an analogue to digital converter connected to the second input to convert the analogue data to digital video data and means for converting the digital video data selected from the first input or the second input in accordance with a selection signal, into parallel format data and for supplying said parallel format data to the input arrangement of the frame memory unit;
(c) an output processor connected to the output arrangement of the frame memory unit for outputting digital video data from the recording system;
(d) an interface unit including a parallel interface means for transferring control data and digital video data between the recording system and an external processing system;
(e) a parallel communications link for transferring parallel format high definition digital video data between the interface unit and the input arrangement and the output arrangement of the frame memory unit; and
(f) a control unit connected to the frame memory unit the interface unit, and the input processor for controlling the storage of parallel format digital video data within the frame memory unit, and for controlling the transfer of digital video data between the input and output arrangements of the memory unit and the parallel communications link, the control unit being connected to the interface unit via a further communications link to transfer control data there-between for controlling transfer of data between the parallel communications link and the interface unit;
the control unit including means for generating the said selection signal.

A preferred embodiment of the invention described in detail below includes means for digitally recording multiple fields or frames of a colour, high definition (either digital or analog) video signal. The preferred embodiment provides a video frame recording system for digitally recording multiple frames of a colour, high definition video signal, and transferring individual frames to and from a host computer or image processor.

The preferred system can record one or more individual fields or frames of a colour, high definition video signal for subsequent transfer to a processing or display unit. The preferred system is capable of digitally recording as many as 32 frames of a colour, high definition video signal per memory board (as many as four memory boards may be installed in the system). The preferred system is capable of performing partial or full frame or field transfers at any selected rate less than or equal to the standard video rate. The preferred system accepts HDTV signals (including Green, Blue, and Red (G, B and R) component signals of a colour HDTV signal) in either digital or analog format, includes a post processing unit for simultaneously outputting HDTV signals in both digital and analog format, and emulates a conventional video tape recorder in the sense that it responds to conventional video tape recorder control signals.

The preferred system includes a control unit (for controlling the system's frame memory circuits) and a parallel computer interface. The interface permits full or partial fields or frames to be transferred (in non-real time) between the frame memory circuits and a host computer via a conventional communication link such as an SCSI, DR11 or DRV11 (trade marks of Digital Equipment Corporation), or other conventional link. The control unit and the computer interface are directly interconnected, so that a host computer may control memory access through the interface. The control unit also accepts commands from a conventional video tape recorder remote control panel.

The design of the preferred system permits record and playback sequences to be freely configured. Frame or field playback of selected duration can be intermixed, with any selected time interval between actions, and any stored field or frame can follow any other upon playback. Accordingly, continuous motion can be simulated by using all or part of the available frames in a repeating sequence.

The preferred embodiment is a G, B, R equal bandwidth system employing a sampling rate of 74.25 MHz. Also, in the preferred embodiment, the memory capacity of the system is modular, and may readily be expanded (for example, from 8 frames to 32 frames) by installation of additional random access semiconductor memory integrated circuits.

The invention will now be further described, by way of illustrative and non-limiting example, with reference to the accompanying drawings, in which:
Figure 1 is a block diagram of a high definition video signal recording system according to a preferred embodiment of the invention;
Figures 1A to 1F show respective portions of the system of Figure 1, the relationship between Figures 1A to 1F being shown by the map (identified as "Figure 1 map") of Figure 1; and
Figure 2 is a block diagram of a portion of the system of Figure 1, showing a preferred embodiment of one of four memory boards within a frame memory unit of Figure 1.

The illustrated high definition video signal recording system includes an input processor 10, a frame memory unit 40, a post processor 60, a control unit 80, and a computer interface unit 100.

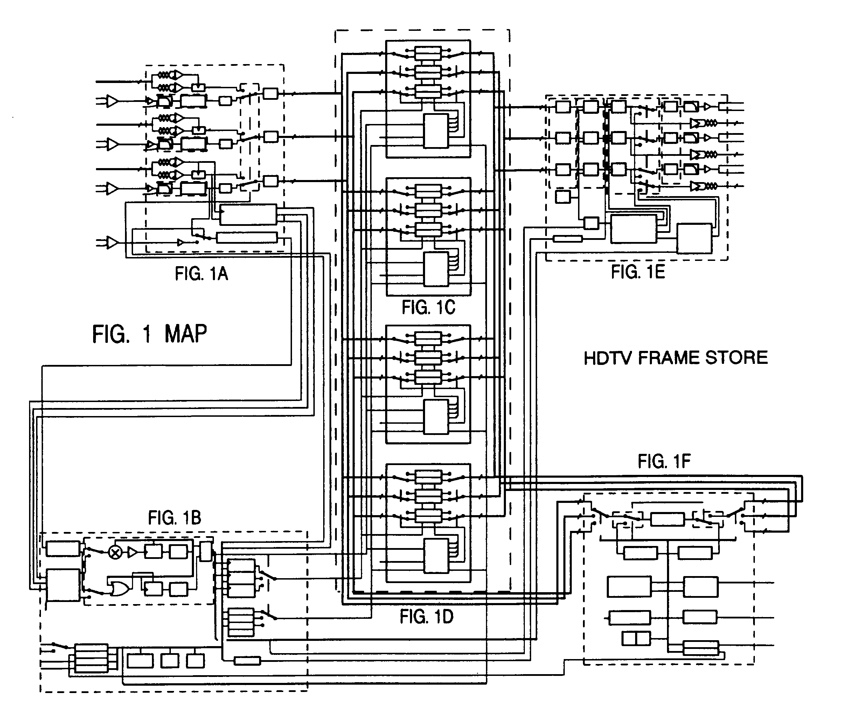

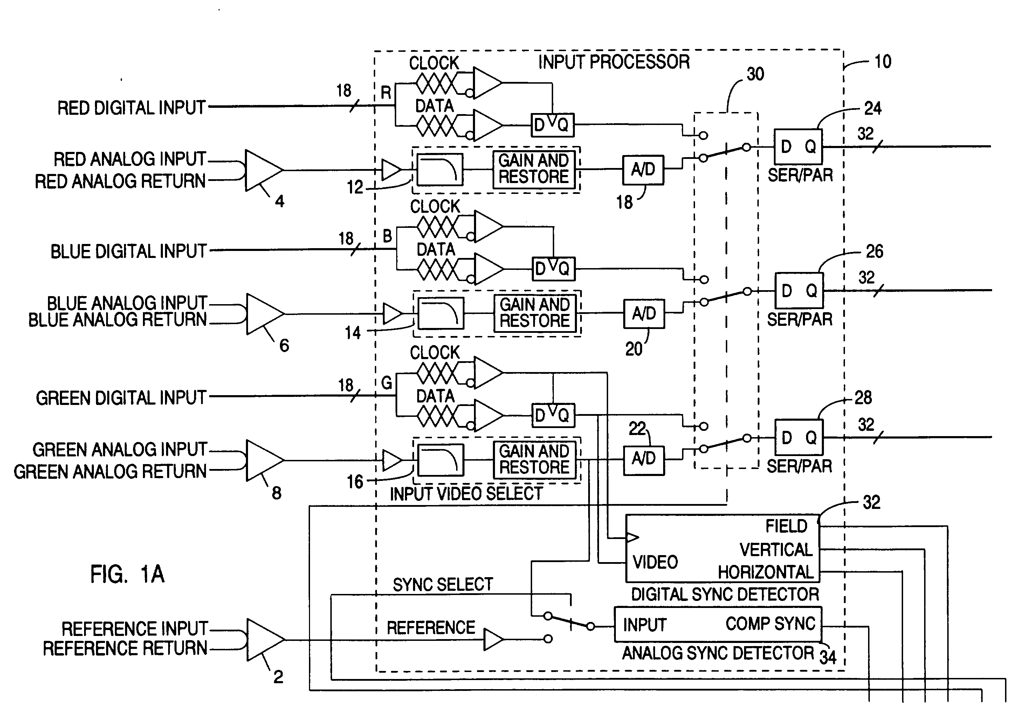

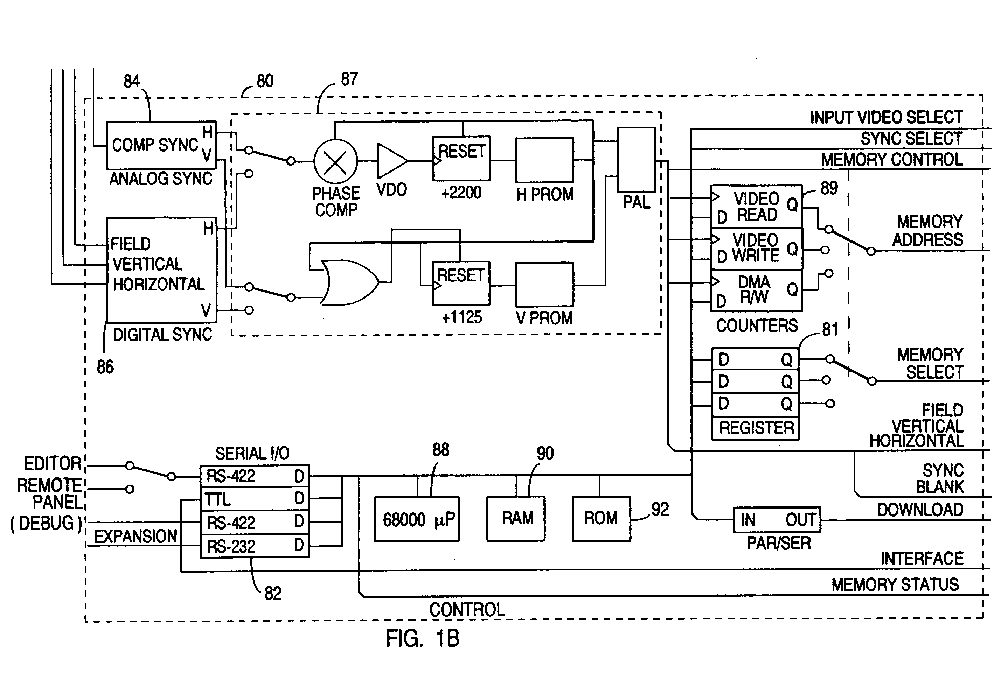

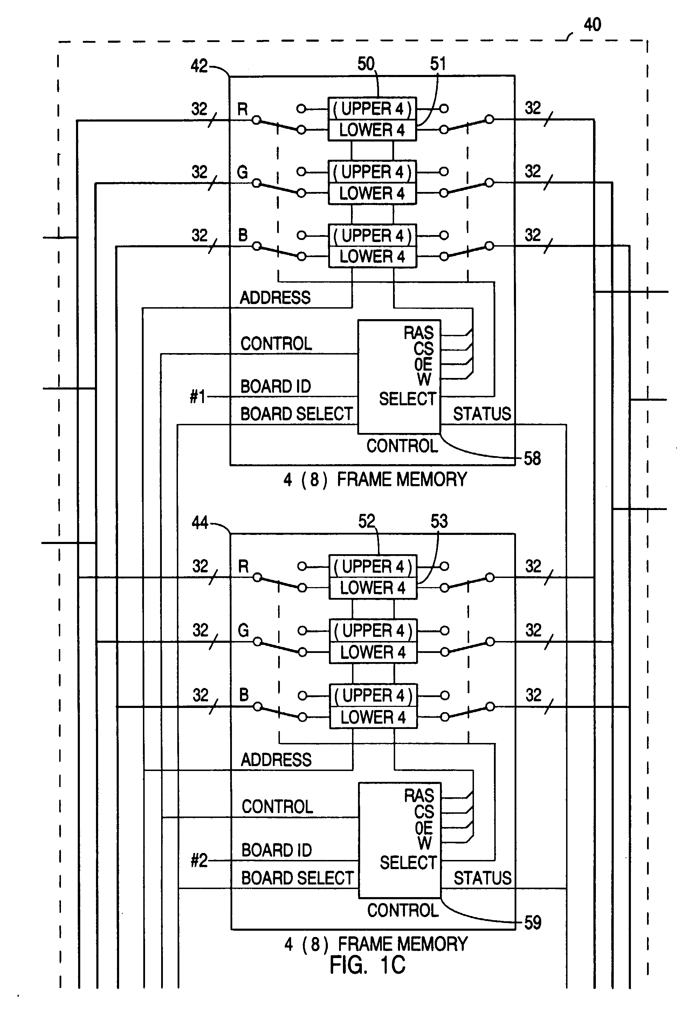

The input processor 10 (Figure 1A) accepts, processes, and outputs either a set of Red, Green, and Blue (R, G and B) digital HDTV signals, or a set of R, G and B analog HDTV signals, depending on the state of a switch unit 30. The switch unit 30 is controlled by an Input Video Select signal from the control unit 80 (Figure 1B). When the switch 30 is in a "digital input signal" mode or state, parallel bits (typically 18 parallel bits) which constitute each of the Red, Blue, and Green digital HDTV signals are routed to serial-to-parallel converters 24, 26, and 28, respectively. When the switch 30 is in an "analog input signal" state, the Red, Blue and Green analog HDTV signals are digitised in analog-to-digital (A/D) converters 18, 20, and 22, respectively, and then routed to the serial-to-parallel converters 24, 26, and 28, respectively. In a preferred form of embodiment, the converters 18, 20, and 22 are eight-bit converters having a sampling rate of 74.25 MHz, and each of the serial-to-parallel converters 24, 26, and 28 generates a 32-bit parallel output signal at a more manageable rate of 18.5625 MHz.

If the switch unit 30 has been set to the "analog input signal" mode or position, the Red, Blue, and Green analog HDTV signals are supplied to filter and gain control units 12, 14, and 16, respectively, before they are digitised in the converters 18, 20, and 22. Each of the units 12, 14, and 16 preferably includes a low-pass filter designed to maintain a flat bandwidth from 0 to 30 MHz, uniform group delay, and maximum out-of-band attenuation. Each of the units 12, 14, and 16 preferably also includes a means for gain normalising and black referencing the filtered input signals.

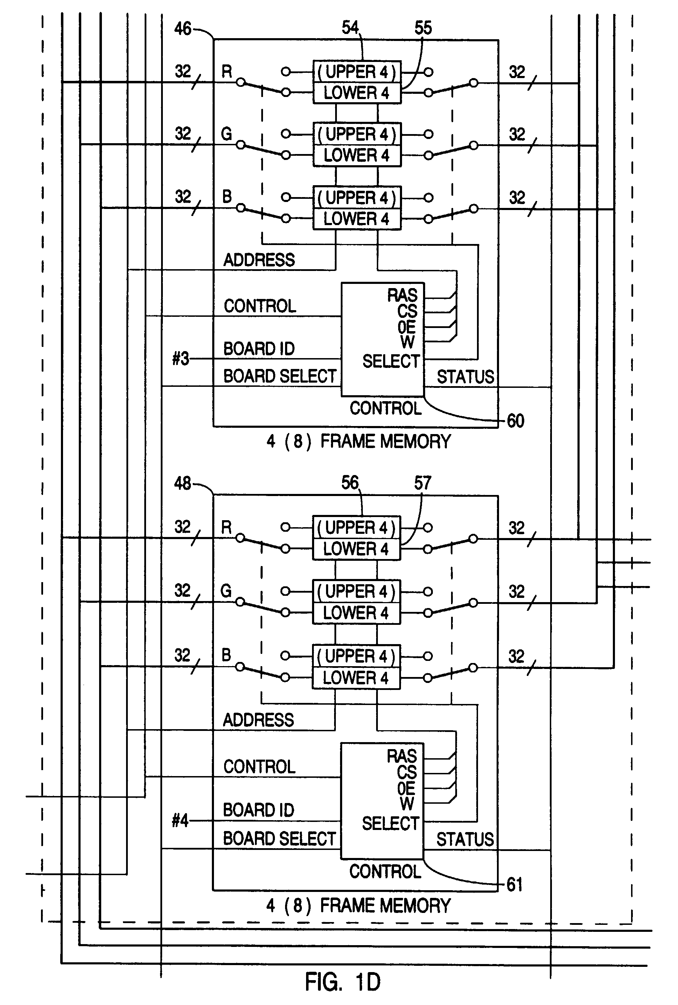

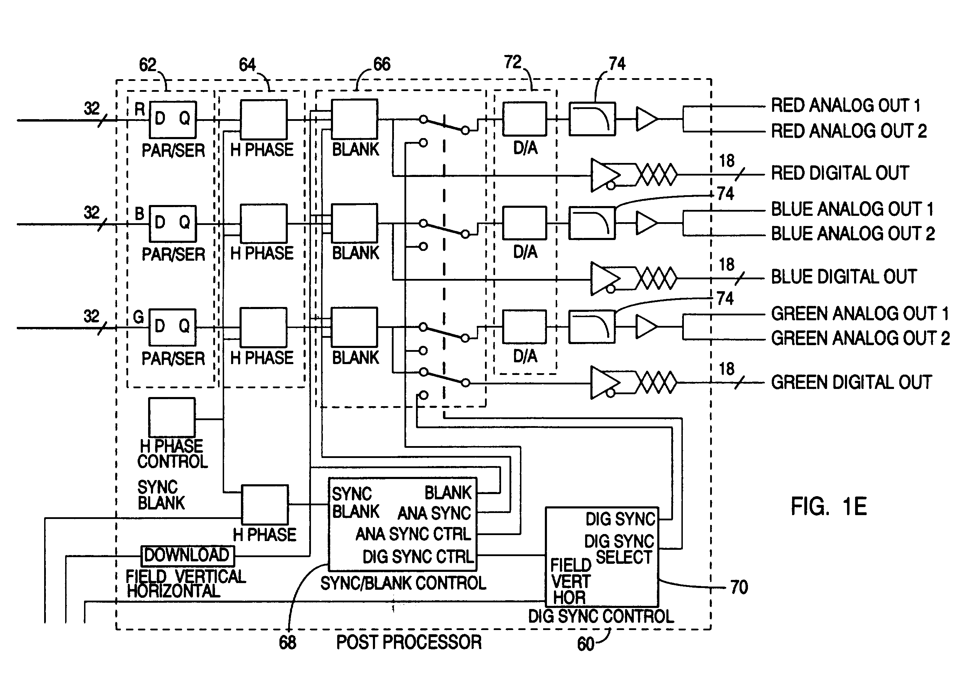

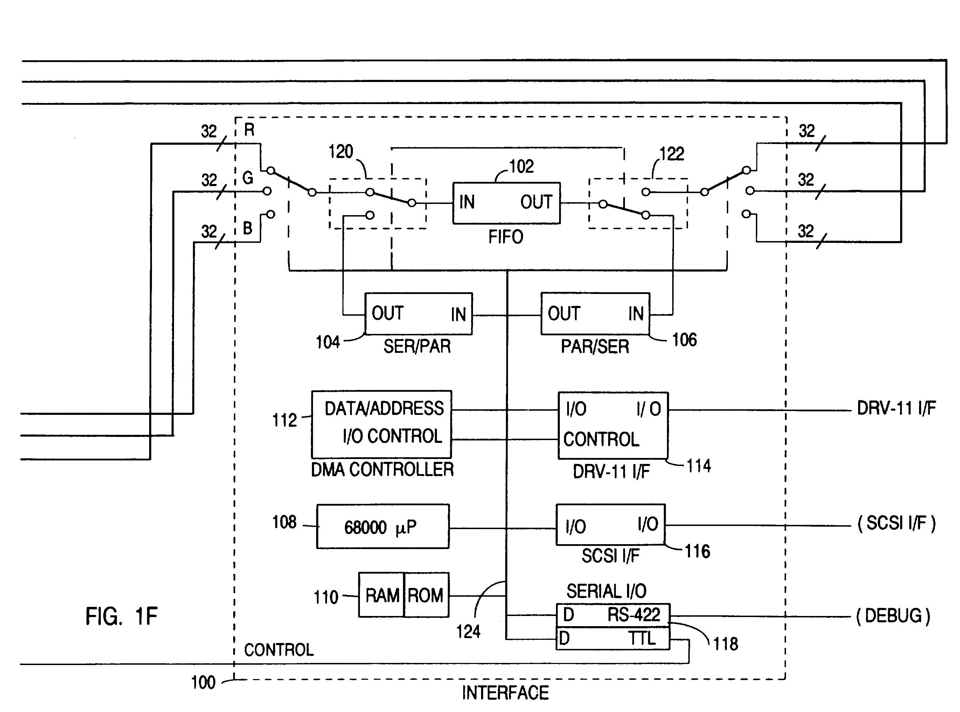

The input processor 10 accepts an external reference input signal (as do conventional video tape recorders), and includes a digital sync detector 32 for extracting synchronisation information from one of the Red, Green, or Blue digital HDTV input signals (the Green digital HDTV input signal, in the configuration shown in Figure 1). The input processor 10 also includes an analog sync detector 34 for extracting synchronisation information from either the external reference signal or one of the Red, Green, or Blue analog HDTV input signals (the Green analog HDTV input signal, in the configuration shown in Figure 1), in response to a Sync Select signal from the control unit 80.

Circuits 2, 4, 6, and 8 are provided for returning at least a portion of the Reference, Red, Blue, and Green analog HDTV input signals, respectively, so that the returned signals may be processed or displayed in other means (not shown in the drawings). Preferably, the circuits 2, 4, 6, and 8 are operable in a first mode in which they do return, and a second mode in which they do not return, at least a portion of their input signals.

The frame memory unit 40 includes four identical memory boards 42, 44, 46, and 48 (Figures 1C and 1D). Each of the memory boards 42, 44, 46, and 48 stores either four or eight frames of Red, Green, and Blue images, depending on the number of integrated memory circuits installed thereon and enabled. In variations of the Figure 1 embodiment, either one or two memory boards may be deleted from the frame memory unit 40. Each frame of each of the Green, Blue, and Red component signals is allocated 2 Mbytes of memory. The active video portion of each frame requires somewhat less than 2 Mbytes, with the remainder of the memory allocated for each frame being used for test signal generation or other purposes.

Preferably, standard 256K by 4-bit dynamic memory integrated circuits (ICs) are used in each of memory boards 42, 44, 46, and 48, in order to minimise power consumption, reduce cost, and ensure availability. Standard memory ICs require a wide word width to support the high data rate of high definition video signals. The word width in the frame memory unit 40 is preferably 32 pixels, which results in an easily managed memory cycle period of approximately 430 ns.

The memory circuits within each of the memory boards 42, 44, 46, and 48 are grouped into two sets. The memory circuits for processing "Red" input signals include a first (or "upper") set 50 of memory ICs and a second (or "lower") set 51 of memory ICs (within the board 42), a first (or "upper") set 52 of memory ICs and a second (or "lower") set 53 of memory ICs (within the board 44), a first (or "upper") set 54 of memory ICs and a second (or "lower") set 55 of memory ICs (within the board 46), and a first (or "upper") set 56 of memory ICs and a second (or "lower") set 57 of memory ICs (within the board 48). Similarly, each of the boards 42, 44, 46, and 48 includes upper and lower sets of memory ICs for processing "Green" and "Blue" input signals.

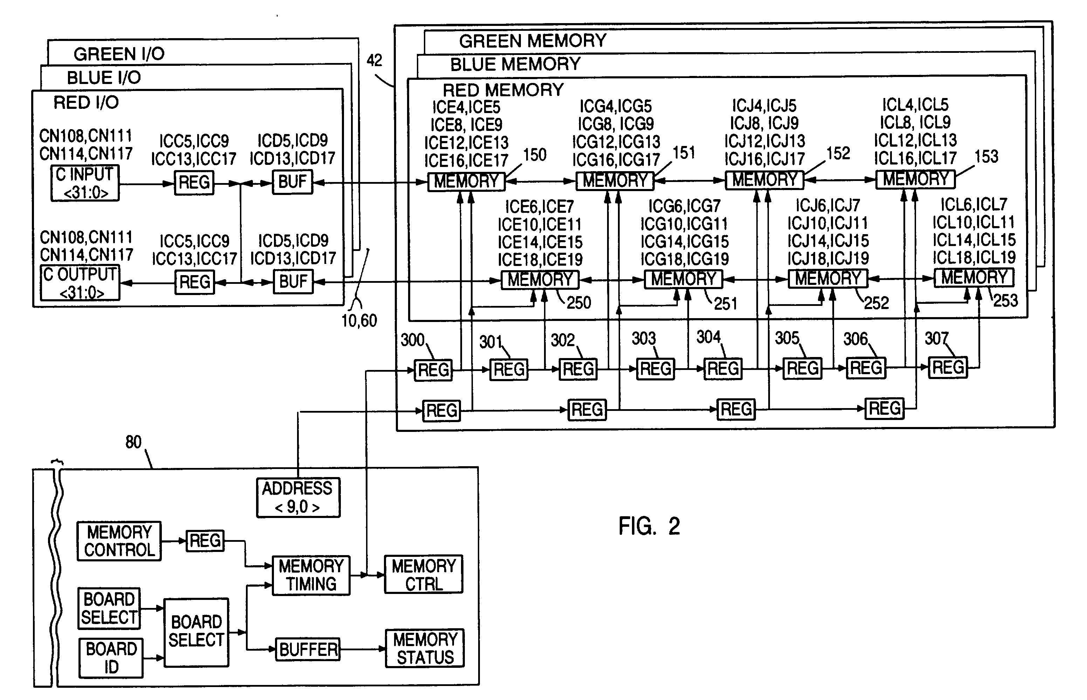

With reference to Figure 2, the frame memory unit 40 includes means for separately disabling (or enabling) the upper or lower sets of memory ICs in response to control signals from the control unit 80. Figure 2 schematically shows a preferred form of embodiment of the memory board 42 of the frame memory unit 40. The "Red" component signal processing circuitry within the board 42 includes groups 150, 151, 152, and 153 of memory circuits (which together comprise the upper set 50 of memory ICs) and groups 250, 251, 252, and 253 of memory circuits (which together comprise the lower set 51 of memory ICs). The control unit 80 includes means for sending control signals to the memory board 42 to enable the groups 150, 151, 152, and 153 or the groups 250, 251, 252, and 253, or all of these groups. The system is thus capable of operating in a mode in which either or both of the upper and lower sets of memory ICs are enabled.

In this preferred embodiment, each pixel corresponds to eight bits, so that each 32-bit cluster of parallel bits from the input processor 10 represents a cluster of four pixels. To avoid the use of numerous serial to parallel converters (and parallel to serial converters) in the frame memory unit 40, it is preferred to employ an 8-to-1 interleaving technique to write data from the input processor 10 to the memory boards of the frame memory 40 (and the reverse process to read data from the memory boards for transfer to the post processor 60). In accordance with this interleaving technique, consecutive clusters of four pixels to be written into memory are accepted consecutively by different memory ICs (or groups of memory ICs). To accomplish this, memory control signals supplied from the control unit 80 to the frame memory unit 40 are staggered (i.e. time-division multiplexed) so that only one eighth of the memory ICs interacts with each cluster of four pixels (for each of the Red, Blue, and Green video signals). The time-division-multiplexed signals may be generated by dividing a primary control signal into portions, and passing each portion through a different time delay element to produce the time-division-multiplexed control signals at the outputs of the time delay elements.

For example, the group 150 of memory ICs (shown in Figure 2), in response to a first control signal (memory select signal) supplied through a shift register 300 from the control unit 80, will store 32-bit parallel data (representing a first cluster of four pixels) from the Red input signal. The group 250 of memory ICs, in response to another control signal supplied through (and delayed by) both the shift register 300 and a shift register 301, will store 32-bit parallel data (representing a second cluster of four pixels) from the Red input signal. Similarly, the group 151 of memory ICs, in response to another control signal supplied through (and delayed by) the shift registers 300 and 301, and a shift register 302, will store 32-bit parallel data representing a third cluster of four pixels from the Red input signal; the group 251 of memory ICs, in response to another control signal supplied through (and delayed by) the shift registers 300, 301 and 302, and a shift register 303, will store 32-bit parallel data representing a fourth cluster of four pixels from the Red input signal; the group 152 of memory ICs, in response to another control signal supplied through the shift registers 300, 301, 302 and 303, and a shift register 304, will store 32-bit parallel data representing a fifth cluster of four pixels from the Red input signal; the group 252 of memory ICs, in response to another control signal supplied through the shift registers 300, 301, 302, 303 and 304, and a shift register 305, will store 32-bit parallel data representing a sixth cluster of four pixels from the Red input signal; the group 153 of memory ICs, in response to another control signal supplied through the shift registers 300, 301, 302, 303, 304, 305, and a shift register 306, will store 32-bit parallel data representing a seventh cluster of four pixels from the Red input signal; and the group 253 of memory ICs, in response to another control signal supplied through the shift registers 300, 301, 302, 303, 304, 305, 306, and a shift register 307, will store 32-bit parallel data representing an eighth cluster of four pixels from the Red input signal.

The primary memory timing and address generation is performed in the control unit 80, to reduce circuit redundancy. Each of the memory boards 42, 44, 46, and 48 receives time-division multiplexed row and column addresses and memory cycle control signals. The addresses are passed directly to the array of memory ICs within each board, and the cycle control signals are converted by programmable logic arrays 58, 59, 60, and 61 (in the boards 42, 44, 46, and 48, respectively) to dynamic memory and bus control signals. A series of registers 81 (shown in Figure 1B) in the control unit 80 is employed to generate the staggered board selection signals supplied to the logic arrays 58, 59, 60, and 61 within the boards 42, 44, 46, and 48 during the described interleaving operation.

In an arrangement in which each set of memory ICs 50 to 57 includes 256K by 4-bit dynamic memory ICs, the system has the capacity to store 32 frames of each of the Red, Green, and Blue HDTV component signals (eight frames per board). In a preferred arrangement in which each set of memory ICs 50 to 57 includes 1 Mbyte by 4-bit memory ICs, the system has the capacity to store up to 128 HDTV frames (i.e. 32 frames per board).

The post processor 60 (Figure 1E) accepts parallel 32-bit R, G and B video signals as they are read out from the memory unit 40, and converts each of the R, G, and B video signals back into parallel 8-bit format in a parallel-to-serial conversion unit 62. Digital signals outputted from the conversion unit 62 have a data rate of 74.25 MHz, in the case in which the digital inputs thereto (digital signals from the memory unit 40) have a data rate of 18.5625 MHz.

Next, digitally implemented delay circuitry 64 delays the R, G, and B signals inputted thereto to provide horizontal delay (adjustable within a range of from -400 ns to +400 ns) with a clock period (or 13.468 ns) of resolution. Outputs of the delay circuitry 64 are supplied to blanking and sync insertion circuitry 66. The circuitry 66 operates under the control of a blanking and analog sync control unit 68, and a digital sync control unit 70.

Both digital and analog video signals may be simultaneously outputted from the post processor 60. To generate digital video output signals, the control unit 70 will insert digital sync information into the blanking intervals as the video signals are processed in the circuitry 66, and the signals emerging from the circuitry 66 are converted to a balanced configuration and sent to digital video outputs. To generate analog video output signals, the control unit 68 will insert analog sync information into the blanking intervals as the video signals are processed in the circuitry 66, and the signals emerging from the circuitry 66 are then converted to analog form in digital-to-analog (D/A) converters 72, filtered in analog output signal filters 74, and sent to analog output line drive amplifiers.

The computer interface unit 100 (Figure 1F) implements direct memory access (DMA) by an external processing system (such as a general purpose digital computer or an image processing system) to the frame memory unit 40, so that full or partial fields and frames may be transferred at arbitrary speed to and from the memory unit 40. The interface unit 100 preferably includes an input/output (I/O) port 114 for communicating with external processors having DR11 or DRV11 interfaces (DR11 and DRV11 are trade marks of Digital Equipment Corporation), an SCSI port 116 for communicating with external processors having SCSI interfaces, and serial I/O means 118 for communicating with the control unit 80. Preferably, the interface unit 100 employs a command protocol supporting partial or full-frame transfers between the port 114 or 116 and an external computer (or image processing system) as well as various control functions. Preferably, the port 114 transfers data at a maximum rate of at least 500 kilobytes per second, and the port 116 transfers data at a maximum rate of at least 2 Mbyte per second. Preferably, the interface unit 100 includes logic and resident intelligence (shared with the control unit 80) to provide video test signals and system debug capability.

All data transfers between the interface unit 100 and the frame memory unit 40 (or the input processor 10) flow through a first-in-first-out (FIFO) unit 102, which allows the relatively fast video backplane to communicate with a slower central processor unit (CPU) bus 124 within the interface unit 100. The FIFO unit 102 accepts a 32-bit parallel high definition video signal from the input processor 10 (or the frame memory unit 40), or a 32-bit parallel high definition video signal output from a serial-to-parallel converter 104, depending on the status of a switch 120 at the input of the FIFO unit 102. The 32-bit parallel high definition video signal emerging from the FIFO unit 102 is supplied either to the post processor 60 and the frame memory unit 40, or through a parallel-to-serial converter 106 to the CPU bus 124 within the interface unit 100 (on which bus it may propagate to the port 114 or 116), depending on the status of a switch 122 at the output of the FIFO unit 102. Data transfers from the interface unit 100 to the frame memory unit 40 are permitted only during horizontal blanking intervals, and the FIFO unit 102 allows DMA control circuitry 112 and the other circuitry within the interface unit 100 to continue a DMA operation during the active video period. In one preferred form of supplementation, a CPU 108 connected to the CPU bus 124 is a conventional 68000 microprocessor, and the interface unit 100 includes a memory 110 (including both random access memory (RAM) and read only memory (ROM)).

In order to reduce the amount of circuitry within the interface unit 100 (such as where packaging constraints apply), the control unit 80 may include all circuitry for handling addressing (i.e. for specifying which frame, line, and pixels are involved in a transfer) while circuitry within the interface unit 100 handles the data to be transferred. Internal data transfer (i.e. memory diagnostics and test signal generation) are preferably initiated by the control unit 80, in which case the control unit 80 sends appropriate high level commands to the interface unit 100. External data transfers may be initiated by a host computer or image processing system communicating with the port 114 or 116. When a command is acknowledged by the host computer (or image processing system), the interface unit 100 prepares for the data transfer and sends the relevant addressing information to the control unit 80. When both the interface unit 100 and the control unit 80 are ready, the external data transfer commences.

The control unit 80 (Figure 1B) generates the required timing, synchronisation, and control signals for memory management video processing, and machine control functions. The control unit 80 includes a serial I/O unit 82 having at least one port (such as an RS-422 port) for interfacing to a 9-pin serial control device such as a video editing system, a TTL port for interfacing with the interface unit 100, and an RS-232 port for diagnostic and service testing. In the illustrated embodiment, the control unit 80 also includes a CPU 88, an analog sync circuit 84 and a digital sync circuit 86 (for receiving sync information from the sync detectors 34 and 32, respectively), a master clock generator 87 (which receives the outputs of the circuits 84 and 86), the above-mentioned registers 81 for supplying board selection signals (described above) to the boards 42 to 48 within the frame memory unit 40, address signal circuitry 89 for supplying address signals to the frame memory unit 40, a RAM 90, and a ROM 92. In one preferred form of implementation, the CPU 88 within the control unit 80 is a conventional 68000 microprocessor.

The master clock generator 87 is phase locked to a selected one of the analog input video, digital input video, or reference signal supplied to the input processor 10, and is a primary source for all system timing, addressing, synchronising, and control information.

A TTL interface within the serial I/O unit 82 (of the control unit 80) and a TTL interface within the serial I/O means 118 (of the interface unit 100) provide a bi-directional serial communications link between the control unit 80 and the interface unit 100. Preferably, this link is an eight-bit serial data bus for carrying messages of length variable between 4 bytes and 13 bytes at 38.4K baud. Such message packets will typically include data such as frame or field number, read or write cycle, colour component signal to be acted upon, starting line and column designation, number of lines and columns to be transferred, and an indication as to whether a field or frame is to be transferred.

The CPU 88 of the control unit 80 is preferably programmed to check the validity of the data it receives by checking boundary conditions such as maximum values of 520 lines per field and 1920 columns per line, and to emulate a conventional VTR device by accepting and generating control signals corresponding to VTR control signals. The control unit 80 is preferably also capable of generating local control and status display signals for stand alone use, controlling screen display on the service port, controlling loading of test signal patterns from the interface unit 100, generating sync and processing values commensurate with the SMPTE 240M standard, controlling memory addressing and allocation, and providing system sync locking signals.

Various applications of the above-described system include post production, editing, colorimetry or luminance value changes, animation, and other image processing operations. Partial (or full) fields or frames may be sent from the non-real time parallel computer port or interface 114 or 116 of the system to a remotely located image processor, and the altered video may then be returned to the system for evaluation, storage, and/or post processing and output. Thus, the system enables computer graphics to be mixed with or overlaid onto HDTV signals. The system may be used as a buffer to a high definition digital video tape recorder for archiving computer graphics or for building animation or simulation sequences.

For example, the system may be employed to transfer stored high quality HDTV images to a print processing system for image modification, the images then being transferred back into the system for subsequent transmission to magnetic tape or to a printing press.

Preferably, the CPU 88 in the control unit 80 is programmed to be capable of reading out data representing a repeating sequence of HDTV fields or frames from the system's frame memory unit. When reading out data representing a single field of an HDTV video signal, the post processor 60 is controlled so as to output a frame signal including information representing only this single field. As is well known, such an output frame signal may be easily generated, although it will exhibit only half the resolution of a normal full frame (two field) HDTV video signal.

## Claims

1. A high definition digital video signal recording system, including:
(a) a frame memory unit (40) having an input arrangement for receiving parallel format digital data representing a high definition video signal, and an output arrangement for outputting parallel format digital video data, the frame memory unit including memory circuitry capable of storing data representing one or more frames of the high definition video signal;
(b) an input processor (10) connected to the frame memory unit (40) having a first input for receiving digital video data, a second input for receiving analogue video data and including an analogue to digital converter connected to the second input to convert the analogue data to digital video data and means (24, 26, 28) for converting the digital video data selected from the first input or the second input in accordance with a selection signal, into parallel format data and for supplying said parallel format data to the input arrangement of the frame memory unit (40);
(c) an output processor (60) connected to the output arrangement of the frame memory unit (40) for outputting digital video data from the recording system;
(d) an interface unit (100) including a parallel interface means (114, 116) for transferring control data and digital video data between the recording system and an external processing system;
(e) a parallel communications link (120, 102, 122) for transferring parallel format high definition digital video data between the interface unit (100) and the input arrangement and the output arrangement of the frame memory unit (40); and
(f) a control unit (80) connected to the frame memory unit (40) the interface unit (100), and the input processor (10) for controlling the storage of parallel format digital video data within the frame memory unit (40), and for controlling the transfer of digital video data between the input and output arrangements of the memory unit and the parallel communications link, the control unit being connected to the interface unit via a further communications link (118, 82) to transfer control data there-between for controlling transfer of data between the parallel communications link and the interface unit;
the control unit (80) including means for generating the said selection signal.

2. A system according to claim 1, for a high definition video signal that comprises three high definition video colour component signals, wherein the frame memory unit (40) includes means for separately storing data representing one or more frames of each of the high definition video colour component signals.

3. A system according to claim 1 or claim 2, for an input high definition video signal that is a digital signal having a data rate substantially equal to 74.25 MHz, which is so operative that the parallel format data is supplied to the frame memory unit (40) as a digital signal having a data rate substantially equal to 18.5625 MHz.

4. A system according to any one of the preceding claims, wherein each of the control unit (80) and the interface unit (100) includes a serial interface means (82, 118) so that the control unit and the interface unit are directly connected by a serial communication link, and wherein the control unit (80) includes means (88) programmed to permit the external processor to access the frame memory unit (40) through the interface unit (100).

5. A system according to any one of the preceding claims, wherein the frame memory unit (40) includes a set of memory circuits, wherein the control unit (80) includes means for supplying time-division multiplexed memory control signals to the frame memory unit (40), and wherein the frame memory unit (40) is operative to write consecutive pixel clusters of the parallel format high definition video signal data consecutively into different memory circuits in the set, in response to the time-division multiplexed memory control signals.

6. A system according to any preceding claim, wherein the parallel communications link comprises a First-In-First-Out (FIFO) circuit (102) and the interface unit includes a bus (124) coupling the FIFO circuit to the parallel interface means (116) to transfer the digital video data between the FIFO circuit and the parallel interface means.

7. A system according to any preceding claim, wherein the control unit (80) includes means (88) programmed to read out data representing a repeating sequence of high definition video fields or frames, from the frame memory unit (40) to the output processor (60).

8. A system according to claim 7, wherein the output processor (60) includes a parallel-to-serial conversion means (62) for converting the parallel format data it receives from the frame memory unit (40) into a serial format signal, insertion means (66) for inserting synchronisation information into blanking intervals of the serial format signal, and means (68, 70) for simultaneously generating an analog high definition video output signal and a digital high definition video output signal from the output of the insertion means (66).

9. A system according to any one of the preceding claims, wherein the frame memory unit (40) has the capacity to store data representing 32 frames of a colour high definition video signal.

10. A system according to any one of the preceding claims, wherein the frame memory unit (40) includes four memory boards (42, 44, 46, 48), and wherein each of the memory boards has the capacity to store data representing 32 frames of a colour high definition video signal.

11. A system according to any one of the preceding claims, wherein the control unit (80) is operative to emulate a conventional video tape recorder.

12. A system according to any one of the preceding claims, wherein the frame memory unit (40) is modular, and wherein the capacity of the frame memory unit (40) may be expanded by installation of random access memory circuits in the frame memory unit.

13. A system according to any one of the preceding claims, wherein the control unit (80) includes means (88) programmed to transfer stored data, representing a repeating sequence of high definition video fields or frames, from the memory circuitry within the frame memory unit (40) to the parallel communications link.

## Patentansprüche

1. System zum Aufzeichnen eines hochauflösenden digitalen Videosignals mit
(a) einer Vollbildspeichereinheit (40) mit einer Eingangsanordnung für den Empfang von parallelen digitalen Daten, die ein hochauflösendes Videosignal repräsentieren, und einer Ausgangsanordnung zur Ausgabe von parallelen digitalen Videodaten, wobei die Vollbildspeichereinheit eine Speicherschaltungsanordnung enthält, die in der Lage ist, Daten zu speichern, die ein oder mehrere Vollbilder des hochauflösenden Videosignals repräsentieren,
(b) einem mit der Vollbildspeichereinheit (40) verbundenen Eingangsprozessor (10), der einen ersten Eingang für den Empfang von digitalen Videodaten, einen zweiten Eingang für den Empfang von analogen Videodaten, einen mit dem zweiten Eingang verbundenen Analog/Digital-Wandler zur Umwandlung der analogen Daten in digitale Videodaten aufweist sowie Mittel (24, 26, 28) zur Umwandlung der nach Maßgabe eines Auswahlsignals aus dem ersten Eingang oder dem zweiten Eingang ausgewählten digitalen Videodaten in parallele Daten und zum Zuführen dieser parallelen Daten zu der Eingangsanordnung der Vollbildspeichereinheit (40),
(c) einem mit der Ausgangsanordnung der Vollbildspeichereinheit (40) verbundenen Ausgangsprozessor (60) zur Ausgabe von digitalen Videodaten aus dem Aufzeichnungssystem,
(d) einer Interfaceeinheit (100) mit einer parallelen Interfaceanordnung (114, 116) zum Übertragen von Steuerdaten und digitalen Videodaten zwischen dem Aufzeichnungssystem und einem externen Verarbeitungssystem,
(e) einer parallelen Kommunikations-Zwischenverbindungsanordnung (120, 102, 222) zum Übertragen von parallelen hochauflösenden digitalen Videodaten zwischen der Interfaceeinheit (100) und der Eingangsanordnung und der Ausgangsanordnung der Vollbildspeichereinheit (40) und
(f) einer mit der Vollbildspeichereinheit (40), der Interfaceeinheit (100) und dem Eingangsprozessor (10) verbundenen Steuereinheit (80) zum Steuern der Speicherung von parallelen digitalen Videodaten in der Vollbildspeichereinheit (40) und zum Steuern der Übertragung von digitalen Videodaten zwischen der Eingangs- und der Ausgangsanordnung der Speichereinheit und der parallelen Kommunikations-Zwischenverbindungsanordnung, wobei die Steuereinheit über eine weitere Kommunikations-Zwischenverbindungsanordnung (180, 182) mit der Interfaceeinheit verbunden ist, um Steuerdaten zwischen diesen zu übertragen für die Steuerung der Datenübertragung zwischen der parallelen Kommunikations-Zwischenverbindungsanordnung und der Interfaceeinheit,
wobei die Steuereinheit (80) Mittel für die Erzeugung des genannten Auswahlsignals aufweist.

2. System nach Anspruch 1 für ein hochauflösendes Videosignal, das drei hochauflösende Videofarbkomponentensignale enthält, wobei die Vollbildspeichereinheit (40) Mittel aufweist zur getrennten Speicherung von Daten, die ein Vollbild oder mehrere Vollbilder jedes der hochauflösenden Videofarbkomponentensignale repräsentieren.

3. System nach Anspruch 1 oder 2 für ein hochauflösendes Videoeingangssignal in Form eines digitalen Signals, dessen Datenrate im wesentlichen 74,25 MHz beträgt, wobei das System bewirkt, daß die parallelen Daten der Vollbildspeichereinheit (40) im Form eines digitalen Signals zugeführt werden, dessen Datenrate im wesentlichen 18,5625 MHz beträgt.

4. System nach einem der vorhergehenden Ansprüche, bei dem die Steuereinheit (80) und die Interfaceeinheit (100) jeweils serielle Interfaceeinrichtungen (82, 118) aufweisen, so daß die Steuereinheit und die Interfaceeinheit direkt über eine serielle Kommunikations-Zwischenverbindungsanordnung miteinander verbunden sind, und bei dem die Steuereinheit (80) Mittel (88) aufweist, die so programmiert sind, daß sie einem externen Prozessor über die Interfaceeinheit (100) Zugriff auf die Vollbildspeichereinheit (40) ermöglichen.

5. System nach einem der vorhergehenden Ansprüche, bei dem die Vollbildspeichereinheit (40) einen Satz von Speicherschaltungen enthält, die Steuereinheit (80) Mittel zur Lieferung von Zeitmultiplex-Speichersteuersignalen an die Vollbildspeichereinheit (40) enthält und die Vollbildspeichereinheit (40) in Abhängigkeit von den Zeitmultiplex-Speichersteuersignalen das Einschreiben von aufeinanderfolgenden Pixelclustern der parallelen hochauflösenden Videosignaldaten aufeinanderfolgend in verschiedene Speicherschaltungen innerhalb des Satzes von Speicherschaltungen bewirkt.

6. System nach einem der vorhergehenden Ansprüche, bei dem die parallele Kommunikations-Zwischenverbindungsanordnung eine FIFO-(First-In-First-Out)-Schaltung (102) aufweist und die Interfaceeinheit einen Bus (124) umfaßt, der die FIFO-Schaltung mit der parallelen Interfaceanordnung (116) verbindet, um die digitalen Videodaten zwischen der FIFO-Schaltung und der parallelen Interfaceanordnung zu übertragen.

7. System nach einem der vorhergehenden Ansprüche, bei dem die Steuereinheit (80) Mittel (88) enthält, die so programmiert sind, daß Daten, die eine Wiederholungssequenz von hochauflösenden Videohalbbildern oder Videovollbildern repräsentieren, aus der Vollbildspeichereinheit (40) in den Ausgangsprozessor (60) ausgelesen werden.

8. System nach Anspruch 7, bei dem der Ausgangsprozessor (60) einen Parallel/Serien-Wandler (62) aufweist zur Umwandlung der parallelen Daten, die er aus der Vollbildspeichereinheit (40) empfängt, in ein serielles Signal, ferner Einfügungsmittel (66) zum Einfügen einer Synchronisationsinformation in die Austastintervalle des seriellen Signals sowie Mittel (68, 70) zum simultanen Erzeugen eines hochauflösenden analogen Videoausgangssignals und eines hochauflösenden digitalen Videoausgangssignals aus dem Ausgangssignal der Einfügungsmittel (66).

9. System nach einem der vorhergehenden Ansprüche, bei dem die Vollbildspeichereinheit (40) eine Kapazität zur Speicherung von Daten besitzt, die 32 Vollbildern eines hochauflösenden Farbvideosignals repräsentieren.

10. System nach einem der vorhergehenden Ansprüche, bei dem die Vollbildspeichereinheit (40) vier Speicherplatten (42, 44, 46, 48) enthält und bei dem jede dieser Speicherplatten eine Kapazität zur Speicherung von Daten besitzt, die 32 Vollbildern eines hochauflösenden Farbvideosignals repräsentieren.

11. System nach einem der vorhergehenden Ansprüche, bei dem die Steuereinheit (80) das Emulieren eines herkömmlichen Videorekorders bewirkt.

12. System nach einem der vorhergehenden Ansprüche, bei dem die Vollbildspeichereinheit (40) modular aufgebaut ist und die Kapazität der Vollbildspeichereinheit (40) durch das Installieren von Speicherschaltungen mit wahlfreiem Zugriff in die Vollbildspeichereinheit erweiterbar ist.

13. System nach einem der vorhergehenden Ansprüche, bei dem die Steuereinheit (80) Mittel (88) aufweist, die so programmiert sind, daß sie gespeicherte Daten, die eine Wiederholungssequenz von hochauflösenden Videohalbbildern oder Videovollbildern repräsentieren, aus der Speicherschaltung der Vollbildspeichereinheit (40) zu der parallelen Kommunikations-Zwischenverbindungsanordnung überträgt.

## Revendications

1. Système d'enregistrement de signal vidéo numérique haute définition, incluant:
(a) un module de mémoire d'images (40) comportant un agencement d'entrée pour recevoir des données numériques de format parallèle représentant un signal vidéo haute définition, et un agencement de sortie pour sortir des données vidéo numériques de format parallèle, le module de mémoire d'images incluant des circuits de mémoire capables de mémoriser des données représentant une ou plusieurs images du signal vidéo haute définition ;
(b) un processeur d'entrée (10), connecté au module de mémoire d'images (40), comportant une première entrée pour recevoir des données vidéo numériques, une seconde entrée pour recevoir des données vidéo analogiques, et incluant un convertisseur d'analogique en numérique, connecté à la seconde entrée, pour convertir les données analogiques en données vidéo numériques, et un moyen (24, 26, 28) pour convertir les données vidéo numériques, sélectionnées à partir de la première entrée ou de la seconde entrée en fonction d'un signal de sélection, en données de format parallèle et pour délivrer lesdites données de format parallèle à l'agencement d'entrée du module de mémoire d'images (40) ;
(c) un processeur de sortie (60), connecté à l'agencement de sortie du module de mémoire d'images (40), pour sortir des données vidéo numériques du système d'enregistrement ;
(d) un module d'interface (100) incluant un moyen formant interface parallèle (114, 116) pour transférer des données de commande et des données vidéo numériques entre le système d'enregistrement et un système de traitement externe ;
(e) une liaison de transmission parallèle (120, 102, 122) pour transférer des données numériques haute définition de format parallèle entre le module d'interface (100) et l'agencement d'entrée et l'agencement de sortie du module de mémoire d'images (40) ; et
(f) un module de commande (80) connecté au module de mémoire d'images (40), au module d'interface (100), et au processeur d'entrée (10) pour commander la mémorisation de données vidéo numériques de format parallèle dans le module de mémoire d'images (40), et pour commander le transfert de données vidéo numériques entre les agencements d'entrée et de sortie du module de mémoire et la liaison de transmission parallèle, le module de commande étant connecté au module d'interface par l'intermédiaire d'une liaison de transmission supplémentaire (118, 82) pour transférer, entre les deux, des données de commande pour commander le transfert de données entre la liaison de transmission parallèle et le module d'interface ;
le module de commande (80) incluant un moyen pour produire ledit signal de sélection.

2. Système selon la revendication 1, pour un signal vidéo haute définition qui comprend trois signaux de composante de couleur vidéo haute définition, dans lequel le module de mémoire d'images (40) comprend un moyen pour mémoriser séparément des données représentant une ou plusieurs images de chacun des signaux de composante de couleur vidéo haute définition.

3. Système selon la revendication 1 ou la revendication 2, pour un signal vidéo haute définition d'entrée qui est un signal numérique ayant une cadence de données sensiblement égale à 74,25 MHz, qui fonctionne de façon à délivrer la donnée de format parallèle au module de mémoire d'images (40) comme un signal numérique ayant une cadence de données sensiblement égale à 18,5625 MHz.

4. Système selon l'une quelconque des revendications précédentes, dans lequel chacun du module de commande (80) et du module d'interface (100) comprend un moyen formant interface sérielle (82, 118) de sorte que le module de commande et le module d'interface sont connectés directement par une liaison de transmission sérielle, et dans lequel le module de commande 80 comprend un moyen (88) programmé pour permettre au processeur externe d'accéder au module de mémoire d'images (40) par l'intermédiaire du module d'interface (100).

5. Système selon l'une quelconque des revendications précédentes, dans lequel le module de mémoire d'images (40) comprend un ensemble de circuits de mémoire, dans lequel le module de commande (80) comprend un moyen pour délivrer des signaux de commande de mémoire, multiplexés par répartition dans le temps, au module de mémoire d'images (40), et dans lequel le module de mémoire d'images (40) sert à écrire des grappes consécutives de pixels des données de signal vidéo haute définition de format parallèle, consécutivement, dans des circuits de mémoire différents de l'ensemble, en réponse à des signaux de commande de mémoire multiplexés par répartition dans le temps.

6. Système selon l'une quelconque des revendications précédentes, dans lequel la liaison de transmission parallèle comprend un circuit de type premier entré-premier sorti (FIFO) (102) et dans lequel le module d'interface comprend un bus (124) raccordant le circuit FIFO au moyen formant interface parallèle (116) pour transférer les données vidéo numériques entre le circuit FIFO et le moyen formant interface parallèle.

7. Système selon l'une quelconque des revendications précédentes, dans lequel le module de commande (80) comprend un moyen (88) programmé pour lire, dans le module de mémoire d'images (40), des données représentant une séquence répétitive de trames ou d'images vidéo haute définition pour les envoyer au processeur de sortie (60).

8. Système selon la revendication 7, dans lequel le processeur de sortie (60) comprend un moyen de conversion de parallèle en série (62) pour convertir les données de format parallèle qu'il reçoit du module de mémoire d'images (40) en un signal de format sériel, un moyen d'insertion (66) pour insérer de l'information de synchronisation dans les intervalles de suppression du signal de format sériel, et un moyen (68, 70) pour produire en même temps un signal de sortie vidéo haute définition analogique et un signal de sortie vidéo haute définition numérique à partir de la sortie du moyen d'insertion (66).

9. Système selon l'une quelconque des revendications précédentes, dans lequel le module de mémoire d'images (40) a la capacité de mémoriser des données représentant 32 images d'un signal vidéo couleur haute définition.

10. Système selon l'une quelconque des revendications précédentes, dans lequel le module de mémoire d'images (40) comprend quatre cartes de mémoire (42, 44, 46, 48), et dans lequel chacune des cartes de mémoire a la capacité de mémoriser des données représentant 32 images d'un signal vidéo couleur haute définition.

11. Système selon l'une quelconque des revendications précédentes, dans lequel le module de commande (80) peut servir à simuler un magnétoscope classique.

12. Système selon l'une quelconque des revendications précédentes, dans lequel le module de mémoire d'images (40) est modulaire, et dans lequel la capacité du module de mémoire d'image (40) peut être étendue par l'installation de circuits de mémoire vive dans le module de mémoire d'images.

13. Système selon l'une quelconque des revendications précédentes, dans lequel le module de commande (80) comprend un moyen (88) programmé pour transférer des données mémorisées, représentant une séquence répétitive de trames ou d'images vidéo haute définition, des circuits de mémoire du module de mémoire d'images (40) à la liaison de transmission parallèle.
